# EUROPÄISCHE PATENTSCHRIFT

(11) **EP 2 994 330 B1**
(45) Veröffentlichungstag und Bekanntmachung des Hinweises auf die Patenterteilung: **01.08.2018**
(21) Anmeldenummer: 14721326.8
(22) Anmeldetag: 29.04.2014
(51) Int. Cl.: B60K 35/00, B62D 15/02, B60W 30/10, B60W 30/12, B60W 50/14

(54) **ANZEIGEVORRICHTUNG FÜR EIN FAHRZEUG ZUM HINWEISEN AUF ZUKÜNFTIGE AUTOMATISCH DURCHZUFÜHRENDE LENKEINGRIFFE**
DISPLAY DEVICE FOR A VEHICLE FOR INDICATING FUTURE STEERING INTERVENTIONS TO BE OPERATED AUTOMATICALLY
DISPOSITIF D'AFFICHAGE POUR UN VÉHICULE, LE DISPOSITIF PERMETTANT D'INDIQUER DES INTERVENTIONS AUTOMATIQUES FUTURES SUR LA DIRECTION DU VÉHICULE

(30) Priorität: 06.05.2013 DE 102013208206
(43) Veröffentlichungstag der Anmeldung: 16.03.2016
(73) Patentinhaber: Bayerische Motoren Werke Aktiengesellschaft, 80809 München (DE)
(72) Erfinder: EICHHORN, Julian, 80639 München (DE)
(86) Internationale Anmeldenummer: PCT/EP2014/058707
(87) Internationale Veröffentlichungsnummer: WO 2014/180713

(56) Entgegenhaltungen:
- EP-A1- 1 484 234
- DE-A1- 10 346 691
- DE-A1- 10 352 733
- DE-A1-102007 060 347
- DE-A1-102010 002 105
- US-A- 5 666 102
- US-A1- 2009 319 095
- US-B1- 8 346 426

## Beschreibung

Die Erfindung betrifft eine Anzeigevorrichtung zum Hinweisen auf zukünftige automatisch durchgeführte Lenkeingriffe in einem Fahrzeug.

Heutzutage sind Prototypen von Fahrzeugen bekannt, die automatisiert Fahren können, das heißt Fahrmanöver planen und vornehmen, ohne dass es eines menschlichen Eingriffes bedarf. Es ist abzusehen, dass Entwicklungen in diesem Bereich voranschreiten werden und teilweises oder vollständig automatisiertes Fahren immer häufiger zum Einsatz kommen wird.

Ein Passagier eines automatisch bewegten Fahrzeuges ist dabei zunächst nicht in die Entscheidung zukünftiger Fahrmanöver eingebunden. Der Passagier hat zunächst keine Möglichkeit Einblicke in den Zustand der errechneten zukünftigen Manöver zu gewinnen und/oder diese zu kontrollieren. Somit kann ein Passagier die Sicherheit der zukünftigen errechneten Fahrt zunächst nicht beurteilen. Allerdings ist er natürlich diesen Fahrmanövern ausgesetzt, was auch die Einwirkung von Kräften auf seinen Körper mit einschließt, beispielsweise beim Beschleunigen, Abbremsen, Spurwechseln oder in Kurvenfahrten. Gleichzeitig besteht oft nicht die Möglichkeit sich auf diese Manöver vorzubereiten, was bei manchen Menschen zu Übelkeit oder anderen gesundheitlichen Beeinträchtigungen führen kann.

Eine ähnliche Situation stellt sich heutzutage schon bei im Serieneinsatz befindlichen Einparkassistenten dar, die automatisch die Lenkung beim Einparken steuern. Das Dokument US 2009/0319095 A1 offenbart ein Lenkradsystem für ein Fahrzeug, umfassend eine Anzeige und ein Steuergerät, wobei die Anzeige und das Steuergerät dazu eingerichtet sind, eine Repräsentation einer Vorhersage für das Fahrzeug anzuzeigen.

Das Dokument DE 10 2010 002 105 A1 offenbart ein Verfahren zur Unterstützung eines Fahrers eines Fahrzeugs bei einem Fahrmanöver, bei dem zumindest die Umgebung des Fahrzeugs in Fahrtrichtung vor dem Fahrzeug erfasst wird. Bei einer drohenden Kollision werden dem Fahrer Informationen über einen automatischen Lenkeingriff angezeigt.

Aufgabe der Erfindung ist es, den Zustand der Fahrtplanung, eben insbesondere zukünftige Lenkeingriffe, dem Passagier eines automatisch lenkenden Fahrzeugs darzustellen.

Die Aufgabe der Erfindung wird durch die Gegenstände der unabhängigen Patentansprüche gelöst. Vorteilhafte Ausführungsformen sind in den abhängigen Ansprüchen definiert.

Eine Anzeigevorrichtung zum Hinweisen auf zukünftige automatisch durchgeführte Lenkeingriffe in einem Fahrzeug umfasst: Ein Fahrzeug-Lenkrad; Ein Lichtband, umfassend mehrere neben einander positionierte Lichtelemente; Wobei das Lichtband in dem Fahrzeug-Lenkrad umfasst und sichtbar ist; Eine Steuereinrichtung, die mit dem Lichtband gekoppelt ist und zu Folgendem eingerichtet ist: Empfangen von Angaben zu zukünftigen automatisch durchgeführten Lenkeingriffen, insbesondere von einer Einheit zum automatischen Festlegen von zukünftigen Fahrmanövern; Aktivieren von Lichtelementen des Lichtbandes abhängig von den empfangenen Angaben zu zukünftigen Lenkeingriffen.

Auf diese Weise wird der geplante Lenkeingriff und damit der innere Zustand der automatischen Fahrtplanung auf intuitive und verständliche Weise dem Passagier angezeigt. Es wird ihm so die Möglichkeit gegeben die Sicherheit zumindest von Lenkeingriffen der automatischen Fahrtplanung zu kontrollieren. Der Passagier kann sich auf die zukünftigen Kräfte und Bewegungen einstellen, was das Risiko von Übelkeit verringert.

Das Lichtband kann mehrere in einer Reihe angeordnete Lichtelemente, ähnlich einer Aufreihung von Gliedern einer Kette umfassen. Es können auch mehrere parallele Aufreihungen vorhanden sein im Sinne einer bandförmigen Matrix. Die Lichtelemente können LEDs, OLEDs oder ähnliche im Stand der Technik bekannte Leuchtmittel sein. Das Lichtband kann auch im inaktiven Zustand auf dem Lenkrad sichtbar sein oder aber hinter einer Verkleidung derart angeordnet sein, dass nur die jeweils aktiven Lichtelemente für den Passagier sichtbar sind.

In einer Weiterbildung umfasst der automatische Lenkeingriff die automatische Drehung des Lenkrades und das Auswählen von Lichtelementen umfasst: Bestimmen der Anzahl der Lichtelemente, die aktiviert werden, abhängig vom Betrag der Drehung des zukünftigen Lenkeingriffes. Typischerweise verfügt auch ein Fahrzeug, das Fahrmanöver automatisiert ausführt, über ein Lenkrad, das vom Passagier bedient werden kann. Gleichzeitig wird dieses Lenkrad auch bei automatischen Lenkeingriffen entsprechend der Stärke des Einschlagens der Räder des Fahrzeugs mit bewegt. In dieser Weiterbildung werden somit umso mehr Lichtelemente aktiviert, je größer der Betrag der zukünftigen Drehung des Lenkrades ist. Dies stellt auf einfache Weise und durch räumliche Kopplung an das Lenkrad zukünftige Lenkeingriffe dar.

Das Lichtband kann im Lenkradkranz oder im Pralltopf des Fahrzeug-Lenkrads montiert sein.

Häufig wird dem Passagier zusätzlich die Möglichkeit gegeben durch eigene Betätigung (Drehung) des Lenkrades den automatischen Lenkeingriff zu übersteuern, so dass seine Betätigung die Querführung des Fahrzeugs vorgibt.

In einer Fortbildung ist auf dem Lichtband ein Referenzpunkt vordefiniert und den Lichtelementen des Lichtbandes auf einer Seite des Referenzpunktes wird eine Drehrichtung des Lenkrades zugwiesen. Bei einer Drehung des Lenkrades in diese Drehrichtung werden die dieser Drehrichtung zugewiesenen Lichtelemente aktiviert. Somit werden bei einer Drehung des Lenkrades in eine Richtung jeweils Lichtelemente auf derselben Seite des Referenzpunktes aktiviert. Vorteilhafterweise wird die Zuordnung derart vorgenommen, dass bei einer Drehung des Lenkrades nach links Lichtelemente links des Referenzpunktes aktiviert werden und vice versa für eine Drehung nach rechts.

Vorteilhafterweise wird der Referenzpunkt derart gewählt, dass ein Vektor von der Drehachsenmitte des Lenkrades zu dem Referenzpunkt bei einer Geradeausfahrt des Fahrzeugs keine Vektorkomponente in Querrichtung zum Fahrzeug aufweist. Eine Vektorkomponente symbolisiert eine Raumrichtung bei einer Zerlegung des Vektors in drei Raumrichtungen, von denen eine in Längsrichtung des Fahrzeugs, eine in Querrichtung und eine senkrecht nach oben zeigt. Der Referenzpunkt weist somit keine Querabweichung auf und symbolisiert eine Geradeausfahrt. In einer typischen Implementierung liegt der Referenzpunkt bei einer Lenkradstellung für eine Geradeausfahrt am höchsten Punkt des Lenkradkranzes oder senkrecht darunter.

In einer besonders vorteilhaften Weiterentwicklung wird bei einer Drehung des Lenkrades der Referenzpunkt entsprechend der Drehung des Lenkrades gedreht. Dies bedeutet, dass der Referenzpunkt sich wie das Lenkrad bewegt, also an diesem verhaftet erscheint. Gleichzeitig werden die Lichtelemente derart aktiviert, dass sie bei der Drehung des Lenkrades die zukünftige Position des Referenzpunktes angeben. Die zukünftige Position kann sich dabei auf einen vorbestimmten Zeitpunkt (bspw. 1 s, 2 s oder 5 s) in der Zukunft beziehen. Die zukünftige Position des Referenzpunktes stellt dabei gleichzeitig die zukünftige Position des Lenkrades beziehungsweise zukünftige Verdrehung des Lenkrades dar. Die Aktivierung der Lichtelemente kann derart sein, dass Lichtelemente aktiviert werden, die zwischen dem Referenzpunkt und der Position des Referenzpunktes zu einem vorbestimmten Zeitpunkt in der Zukunft liegen, insbesondere zu einem Zeitpunkt der 1 s, 2 s, 3 s, oder 5 s in der Zukunft liegt. Es besteht somit für den Benutzer ein Pfad aus aktivierten Lichtelementen, dem der Referenzpunkt folgen wird. Es kann dabei vorgesehen sein, dass die Lichtelemente nach und nach deaktiviert werden, sobald der Referenzpunkt während der Drehung das jeweilige Lichtelement überstrichen hat. Mit anderen Worten: Nur der Pfad des Referenzpunktes zwischen der aktuellen Position des Referenzpunktes und der zukünftigen Position des Referenzpunktes wird markiert, indem die auf diesem Pfad liegenden Lichtelemente aktiviert werden. Das Anwachsen des Licht-Pfades über die Zeit ist also mit der Drehbewegung des Lenkrades über die Zeit korreliert und lediglich zeitlich versetzt. Die Aktivierung und Deaktivierung von Lichtelementen kann dabei fortlaufend sein. Das heißt, dass die Aktivierung der Lichtelemente stets in kleinen Zeiträumen aktualisiert wird, beispielsweise alle 0,01s; 0,05s; 0,1 s; 0,2 s oder 0,5s.

### KURZE BESCHREIBUNG DER ZEICHNUNGEN

Fig. 1a bis 1e zeigen schematisch ein Lenkrad mit Hinweis auf zukünftige Lenkeingriffe gemäß einem Ausführungsbeispiel.
Fig. 2 zeigt schematisch eine beispielhafte Sicht, wie sie sich einem Passagier bei einem vollautomatischen Fahren darstellt, gemäß einem Ausführungsbeispiel.

Gleiche Bezugszeichen bezeichnen sich entsprechende Elemente über die Figuren hinweg.

### DETAILLIERTE BESCHREIBUNG DER AUSFÜHRUNGSBEISPIELE

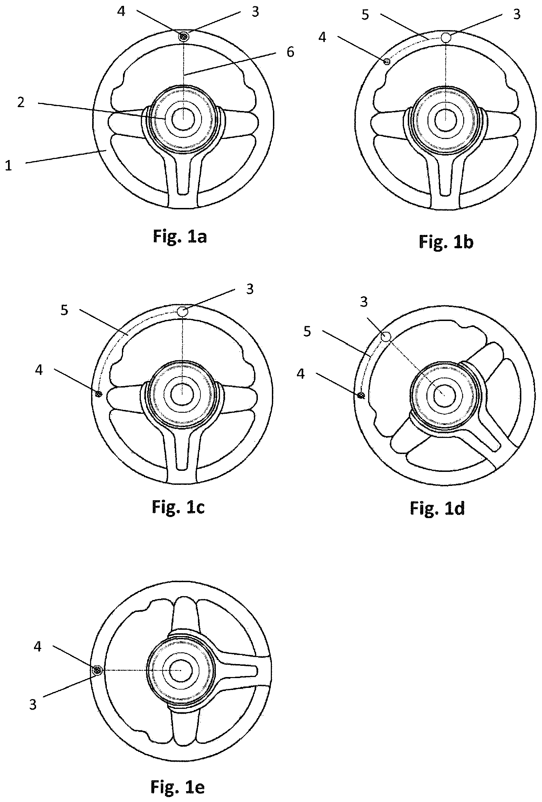

Fig. 1a bis 1e zeigen schematisch ein Lenkrad 1 zu aufeinanderfolgenden Zeitpunkten aus der Sicht eines Passagiers mit Hinweis auf zukünftige Lenkeingriffe gemäß einem Ausführungsbeispiel. Im Beispiel der Fig. 1a befindet sich das Lenkrad 1 zunächst in einer Stellung, in der das Fahrzeug geradeaus fährt. Dann erfolgt ein Lenkeingriff gemäß dem das Lenkrad 1 um 90° gedreht wird. Die Endposition des Lenkrades 1 ist in Fig. 1e gezeigt.

In Fig. 1a befindet sich das Lenkrad 1 in einer Position, die einer Geradeausfahrt des Fahrzeugs entspricht. Im kreisförmigen Lenkradkranz ist ein Lichtband umfasst, das halbtransparent abgedeckt ist, so dass nur aktivierte Lichtelemente für den Passagier des Fahrzeugs sichtbar sind. Das Lichtband ist eine längliche Matrix an Lichtelementen, wobei die Matrix entlang des Lenkradkranzes angeordnet ist und damit ebenso wie der Lenkradkranz einen Kreis beschreibt. Generell wäre auch denkbar für das Lichtband eine Kette an LEDs zu verwenden, die beispielsweise in einem Abstand von ca. 2 cm angeordnet sind. In der Mitte des Lenkrades befindet sich der Pralltopf 2, in dem ein Airbag untergebracht ist und dessen Oberfläche beweglich ist, so dass über sie eine Hupe aktiviert werden kann. Mit dem Bezugszeichen 6 wird der Vektor vom Mittelpunkt der Drehachse des Lenkrades zum Referenzpunkt auf dem Lichtband eingezeichnet. Der Vektor zum Referenzpunkt hat in Fig. 1a keine Querkomponente. Der Referenzpunkt wird durch die Aktivierung mehrerer Lichtelemente markiert, die einen Ring 3 bilden, in dessen Mitte sich der Referenzpunkt befindet. Gleichzeitig wird ein Kreis 4 markiert. Der Mittelpunkt des Kreises 4 befindet sich stets dort, wo der Referenzpunkt in einer vordefinierten Zeitspanne in der Zukunft befinden wird, also im vorliegenden Beispiel dort, wo sich der Referenzpunkt in 2 s in der Zukunft befinden wird. Vorliegend wird sich das Lenkrad von einer Position der Geradeausfahrt zu einer Position mit einem Winkel von 90° nach links gegenüber der Position der Geradeausfahrt innerhalb von 2 s drehen. Es wird also eine Linkskurve gefahren. Fig. 1a zeigt die Situation 4 s bevor die 90° Position des Lenkrads erreicht wird, hier zum Zeitpunkt t = 0 s.

Fig. 1b zeigt das Lenkrad 1 zum Zeitpunkt t = 1 s. Der Kreis 4 ist ca. 45° auf dem Lenkradkranz nach links (gegen den Uhrzeigersinn) gewandert. Gleichzeitig wird ein dünner Streifen Lichtelemente zwischen dem Kreis 4 (also der zukünftigen Position) und dem Ring 3 aktiviert. Dieser dünne Streifen 5 stellt den Pfad da, den der Kreis 3 bis in den nächsten 2 s durchlaufen haben wird. Das Durchlaufen muss nicht gleichmäßig sein und nicht sofort beginnen, wie dies auch im Beispiel der Fig. 1a bis 1e der Fall ist.

Fig. 1c zeigt das Lenkrad 1 zum Zeitpunkt t = 2 s. Der Kreis 4 ist nun ca. weitere 45° auf dem Lenkradkranz nach links gewandert und nun an der Position von 90°. Dementsprechend hat sich auch der dünne Streifen 5 verlängert.

Fig. 1d zeigt die Situation zum Zeitpunkt t = 3 s. Das Lenkrad hat sich in der letzten Sekunde von einer 0° Position zu einer ca. 45° Position gedreht, also der Position, die der Kreis 4 in Fig. 1b angezeigt hat. Lichtelemente, die von dem Referenzpunkt überstrichen wurden beziehungsweise nicht mehr auf dem Pfad liegen, werden deaktiviert. Mit anderen Worten: Der dünne Streifen 5 erleuchtet stets nur den Pfad zwischen dem Kreis 4 und dem Ring 3. Der Kreis 4 ist stationär geblieben im Vergleich zu Fig. 1c, da sich das Lenkrad von dieser Position in den nächsten 2 s nicht weiter drehen wird.

Fig. 1e zeigt das Lenkrad 1 zum Zeitpunkt t = 4 s. Das Lenkrad ist nun um 90° gedreht und wird dort für mindestens die nächsten 2s verharren. Demensprechend wird kein Pfad angezeigt, den der Ring 3 oder der Referenzpunkt überstreichen wird. Der Kreis 4 und der Ring 3 liegen übereinander.

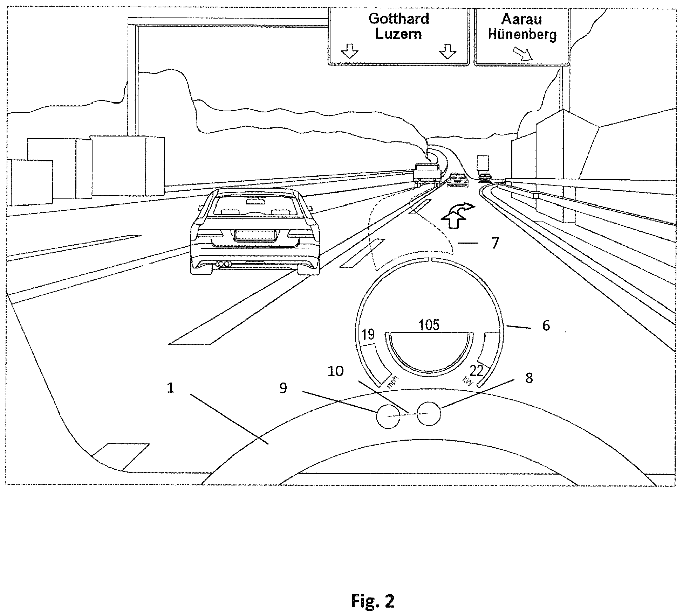

Fig. 2 zeigt schematisch eine beispielhafte Sicht, wie sie sich einem Passagier bei einem vollautomatischen Fahren darstellt, gemäß einem Ausführungsbeispiel. Ein Fahrzeug befindet sich auf einer vierspurigen Autobahn unweit einer Ausfahrt (nach Aarau). Die Autobahn befindet sich im Umbau, weshalb gleichzeitig verschiedene Fahrbahnmarkierungen existieren, beispielsweise gestrichelte Mittelstreifen und zwei fast aufeinanderliegende Pfeile auf der rechten Fahrspur kurz vor der Ausfahrt. Trotz dieser schwierig zu erkennenden Verkehrssituation hat das Fahrzeug vollautomatisch eine zukünftige Fahrtstrecke errechnet, die dem Fahrer kontaktanalog durch den gestrichelten Umriss 7 angezeigt wird. Die Fahrtstrecke führt einen Spurwechsel auf die linke Spur aus. Im Sichtfeld des Fahrers befindet sich ferner eine Informationsanzeige zur Geschwindigkeit und anderen Betriebszuständen des Fahrzeugs. Auf dem Lenkrad 1 wird dem Fahrer der bevorstehende Lenkeingriff dargestellt mithilfe eines Matrixbandes an Lichtelementen. Dazu wird durch Aktivierung von Lichtelementen des Kreises 8 der Referenzpunkt des Lenkrads 1 markiert. Ferner gibt der durch aktivierte Lichtelemente dargestellte Kreis 9 die Position an, die der Referenzpunkt 8 zu einer gewissen Zeit in der Zukunft erreichen wird, hier in 2 s in der Zukunft erreichen wird. Zwischen den beiden Kreisen 8 und 9 werden Lichtelemente aktiviert, die so den Pfad markieren, den der Kreis 8 in Zukunft überstreichen wird.

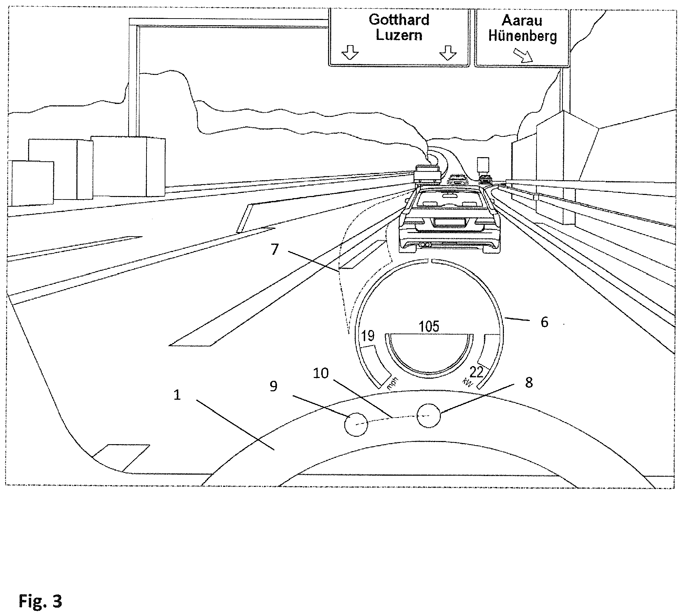

Fig. 3 zeigt schematisch eine beispielhafte Sicht, wie sie sich einem Passagier bei einem vollautomatischen Fahren darstellt, gemäß einem Ausführungsbeispiel. Das Fahrzeug befindet sich an der gleichen Stelle auf der gleichen Autobahn wie in Fig. 2, lediglich ist die Verkehrssituation anders. Auch in Fig. 3 steht ein automatischer Lenkeingriff wie in Fig. 2 bevor. Jedoch ist dieser Eingriff in früher und stärker, wie aus der kontaktanalog eingezeichneten zukünftigen Fahrstrecke, eingezeichnet mit Umriss 7, ersichtlich ist. Dementsprechend ist der Kreis 9, der die zukünftige Position des Referenzpunktes markiert weiter nach links gewandert als in Fig. 2.

## Patentansprüche

1. Anzeigevorrichtung zum Hinweisen auf zukünftige automatisch durchgeführte Lenkeingriffe eines Fahrzeugs, **gekennzeichnet durch**:
Ein Fahrzeug-Lenkrad (1);
Ein Lichtband, umfassend mehrere nebeneinander positionierte Lichtelemente;
Wobei das Lichtband in dem Fahrzeug-Lenkrad (1) umfasst und sichtbar ist;
Eine Steuereinrichtung, die mit dem Lichtband gekoppelt ist und zu Folgendem eingerichtet ist: Empfangen von Angaben zu zukünftigen automatisch durchgeführten Lenkeingriffen, insbesondere von einer Einheit zum automatischen Festlegen von zukünftigen Fahrmanövern; Aktivieren von Lichtelementen des Lichtbandes abhängig von den empfangenen Angaben zu zukünftigen Lenkeingriffen;
wobei der automatische Lenkeingriff die automatische Drehung des Lenkrades (1) umfasst;
wobei das Aktivieren von Lichtelementen umfasst:
Bestimmen der Anzahl der Lichtelemente, die aktiviert werden, abhängig vom Betrag der Drehung des zukünftigen Lenkeingriffes.

2. Anzeigevorrichtung nach Anspruch 1,
wobei auf dem Lichtband ein Referenzpunkt (3) vordefiniert ist, der insbesondere durch Aktivierung von Lichtelementen markiert wird, und
wobei den Lichtelementen des Lichtbandes auf einer Seite des Referenzpunktes (3) eine Drehrichtung des Lenkrades (1) zugwiesen ist; und wobei bei einer Drehung des Lenkrades (1) in diese Drehrichtung, die dieser Drehrichtung zugewiesenen Lichtelemente aktiviert werden.

3. Anzeigevorrichtung nach Anspruch 2, wobei der Referenzpunkt (3) derart gewählt ist, dass ein Vektor von der Drehachsenmitte des Lenkrades (1) zu dem Referenzpunkt (3) bei einer Geradeausfahrt des Fahrzeugs keine Vektorkomponente in Querrichtung zum Fahrzeug aufweist.

4. Anzeigevorrichtung nach Anspruch 3, wobei bei einer Drehung des Lenkrades (1) der Referenzpunkt (3) entsprechend der Drehung des Lenkrades (1) gedreht wird und die Lichtelemente derart aktiviert werden, dass sie bei der Drehung des Lenkrades (1) die zukünftige Position des Referenzpunktes (3) angeben, insbesondere durch eine ring- oder kreisförmige Markierung.

5. Anzeigevorrichtung nach Anspruch 4, wobei Lichtelemente aktiviert werden, die zwischen dem Referenzpunkt (3) und der Position des Referenzpunktes (3) zu einem vorbestimmten Zeitpunkt in der Zukunft liegen, insbesondere zu einem Zeitpunkt der 1 s, 2 s, 3 s, 4s oder 5 s in der Zukunft liegt, wodurch insbesondere eine Spur (5) dargestellt wird.

6. Anzeigevorrichtung nach Anspruch 5, wobei diejenigen Lichtelemente wieder deaktiviert werden, die sich über die Position des Referenzpunktes (3) zum vorbestimmten Zeitpunkt in der Zukunft hinausbewegen.

7. Anzeigevorrichtung nach einem der vorhergehenden Ansprüche, wobei die Lichtelemente fortlaufend entsprechend der Querführung des Fahrzeugs in einer vorbestimmten Zeitspanne in der Zukunft, insbesondere 1 s, 2 s, 3 s, 4s oder 5 s in der Zukunft, aktiviert werden.

## Claims

1. A display device for indicating a future, automatically performed steering intervention of a vehicle, **characterised by**:
a vehicle steering wheel (1);
a light strip, comprising a plurality of light elements positioned nextto one another;
wherein the lightstrip is included in the vehicle steering wheel (1) and
visible therein;
a control device, which is coupled to the light strip and is designed for the following:
receiving information relating to future, automatically performed steering interventions, more especially from a unit for automatically determining future vehicle manoeuvres;
activating light elements of the light strip depending on the received information relating to future steering interventions;
wherein the automatic steering intervention comprises the automatic rotation of the steering wheel (1);
wherein the activation of light elements comprises the following:
determining the number of light elements which are activated depending on the magnitude of the rotation of the future steering intervention.

2. A display device according to claim 1, wherein a reference point (3) is predefined on the light strip and more especially is marked by activation of light elements, and
wherein the light elements of the light strip on one side of the reference point (3) are assigned a direction of rotation of the steering wheel (1); and wherein, in the event of a rotation of the steering wheel (1) in this direction of rotation, the light elements assigned to this direction of rotation are activated.

3. A display device according to claim 2, wherein the reference point(3) is selected in such a way that a vector from the middle of the axis of rotation of the steering wheel (1) to the reference point (3) does not have a vector component in the lateral direction with respect to the vehicle when the vehicle is travelling straight ahead.

4. A display device according to claim 3, wherein, in the event of a rotation of the steering wheel (1), the reference point (3) is rotated in accordance with the rotation of the steering wheel (1) and the light elements are activated in such a way that they specify the future position of the reference point (3) in the event of the rotation of the steering wheel (1), more especially by means of an annular or circular marking.

5. A display device according to claim 4, wherein light elements are activated that lie between the reference point (3) and the position of the reference point (3) at a predetermined time in the future, more especially at a time of 1 s, 2 s, 3 s, 4 s or 5 s in the future, whereby more especially a path (5) is displayed.

6. A display device according to claim 5, wherein those light elements that move beyond the position of the reference point (3) at the predetermined time in future are deactivated again.

7. A display device according to any one of the preceding claims, wherein the light elements are activated continuously in accordance with the lateral control of the vehicle in a predetermined time period in the future, more especially 1 s, 2 s, 3 s, 4 s or 5 s in the future.

## Revendications

1. Dispositif d'affichage permettant d'indiquer des interventions futures effectuées automatiquement sur la direction d'un véhicule,
**caractérisé par** :
un volant (1) du véhicule,
une bande lumineuse comportant plusieurs éléments lumineux, positionnés côte à côte,
la bande lumineuse étant insérée et visible dans le volant (1) du véhicule,
un dispositif de commande couplé à la bande lumineuse est réalisée pour permettre de :
recevoir des données concernant des interventions futures devant être effectuées automatiquement sur la direction, par exemple, à partir d'une unité permettant de déterminer automatiquement des manoeuvres de conduite futures,
activer des éléments lumineux de la bande lumineuse en fonction des données reçues concernant des interventions futures sur la direction, l'intervention automatique sur la direction comprenant la rotation automatique du volant (1),
l'activation d'éléments lumineux comprenant :
la détermination du nombre d'éléments lumineux activés en fonction de l'importance de la rotation de l'intervention future sur la direction.

2. Dispositif d'affichage conforme à la revendication 1, dans lequel sur la bande lumineuse est défini un point de référence (3), qui est en particulier repéré par l'activation d'éléments lumineux,
aux éléments lumineux de la bande lumineuse située d'un côté du point de référence (3) est attribué un sens de rotation du volant (1), et lors d'une rotation du volant (1) dans ce sens de rotation, les éléments lumineux attribués à celui-ci sont activés.

3. Dispositif d'affichage conforme à la revendication 2, dans lequel le point de référence (3) est choisi de sorte que le vecteur allant du centre de l'axe de rotation du volant (1) au point de référence (3) ne comporte pas de composante vectorielle dans la direction transversale du véhicule los d'un déplacement en ligne droite de celui-ci.

4. Dispositif d'affichage conforme à la revendication 3, dans lequel, lors d'une rotation du volant (1), le point de référence (3) et déplacé en rotation conformément à cette rotation du volant (1), et les éléments lumineux sont activés de façon à indiquer lors de la rotation du volant (1) la position future du point de référence (3), en particulier par un repère annulaire ou circulaire.

5. Dispositif d'affichage conforme à la revendication 4, dans lequel sont activés des éléments lumineux qui sont situés entre le point de référence (3) et la position de ce point de référence (3) à un instant futur prédéfini, en particulier à un instant qui est situé à 1 seconde, 2 secondes, 3 secondes, 4 secondes ou 5 secondes dans le futur, et en particulier une trace (5) est représentée.

6. Dispositif d'affichage conforme à la revendication 5, dans lequel sont à nouveau désactivés les éléments lumineux qui passent dans le futur par la position du point de référence (3) à l'instant prédéfini.

7. Dispositif d'affichage conforme à l'une des revendications précédentes dans lequel les éléments lumineux sont activés en continu selon le guidage transversal du véhicule pendant un laps de temps prédéfini dans le futur en particulier 1 seconde, 2 secondes, 3 secondes, 4 secondes ou 5 secondes dans le futur.
